# EUROPEAN PATENT SPECIFICATION

(11) **EP 4 470 745 B1**
(45) Date of publication and mention of the grant of the patent: **23.07.2025**
(21) Application number: 24177753.1
(22) Date of filing: 23.05.2024
(51) Int. Cl.: B29C 45/50, B29C 45/17

(54) **INJECTION UNIT, INJECTION MOLDING MACHINE EQUIPPED WITH THE SAME, AND METHOD FOR MODIFYING AN INJECTION MOLDING MACHINE**
EINSPRITZEINHEIT, DAMIT AUSGESTATTETE SPRITZGIESSMASCHINE UND VERFAHREN ZUM MODIFIZIEREN EINER SPRITZGIESSMASCHINE
UNITÉ D'INJECTION, MACHINE DE MOULAGE PAR INJECTION ÉQUIPÉE DE CELLE-CI ET PROCÉDÉ DE MODIFICATION D'UNE MACHINE DE MOULAGE PAR INJECTION

(30) Priority: 02.06.2023 JP 2023091435
(43) Date of publication of application: 04.12.2024
(73) Proprietor: The Japan Steel Works, Ltd., Tokyo 141-0032 (JP)
(72) Inventor: HORIMOTO, Yuya, Tokyo, 1410032 (JP)
(74) Representative: Simmons & Simmons LLP (Munich)

(56) References cited:
- EP-B1- 2 535 162
- US-A1- 2016 075 065
- US-B2- 7 165 966

## Description

### FIELD

The present invention relates to an injection unit, an injection molding machine equipped with the same, and a method for modifying an injection molding machine.

### BACKGROUND

Injection molding machines are generally classified as hydraulic injection molding machines and electric injection molding machines. US 2020/206995 A1 describes a method for converting a hydraulic injection molding machine into an electric injection molding machine. According to this method, when converting a hydraulic injection molding machine into an electric injection molding machine, the output shaft of the gear reduction gear and the screw drive shaft are connected by a shaft coupling.

### SUMMARY

An injection molding machine mainly comprises an injection unit and a mold clamping unit. When manufacturing an injection molding machine, a mold clamping unit may be combined with one injection unit selected from a number of types. At this time, if the length of the screw of the selected injection unit is insufficient, it is possible to apply the idea described in JP 2020-104370 A and attach a connecting shaft to the screw to compensate for the insufficient length.

When a connecting shaft is attached to a screw to substantially extend the length of the screw, the screw may tilt due to the weight of the connecting shaft, causing the screw to possibly come into contact with the cylinder. If, as a consequence, fine powder is generated that mixes with the injection material or the injection material is abnormally heated and thus discolored, the quality of the molded product may be affected.

An object of the present disclosure is to provide an injection unit that can suppress inclination of a screw to which a connecting shaft is attached.

The injection unit of the present disclosure includes a cylinder, a screw at least a part of which is housed inside the cylinder, a connecting shaft that connects the screw and a drive shaft that drives the screw, and a support member for the connecting shaft. The support member is located between the screw and the drive shaft, allows rotation and axial movement of the connecting shaft, and supports the connecting shaft at least in the vertical direction.

### BRIEF DESCRIPTION OF THE DRAWINGS

Fig. 1 is a schematic front view of an injection molding machine according to an embodiment;
Fig. 2 is a front view showing a part of the injection unit;
Fig. 3A is a front view of the support member;
Fig. 3B is a side view of the support member;
Fig. 3C is an enlarged view of part A in Fig. 3A;
Fig. 4 is a front view showing a part of an injection unit according to a first modification;
Fig. 5A is a front view of a support member according to a second modification; and
Fig. 5B is a side view of a support member according to a second modification.

### DETAILED DESCRIPTION

### Overall Configuration

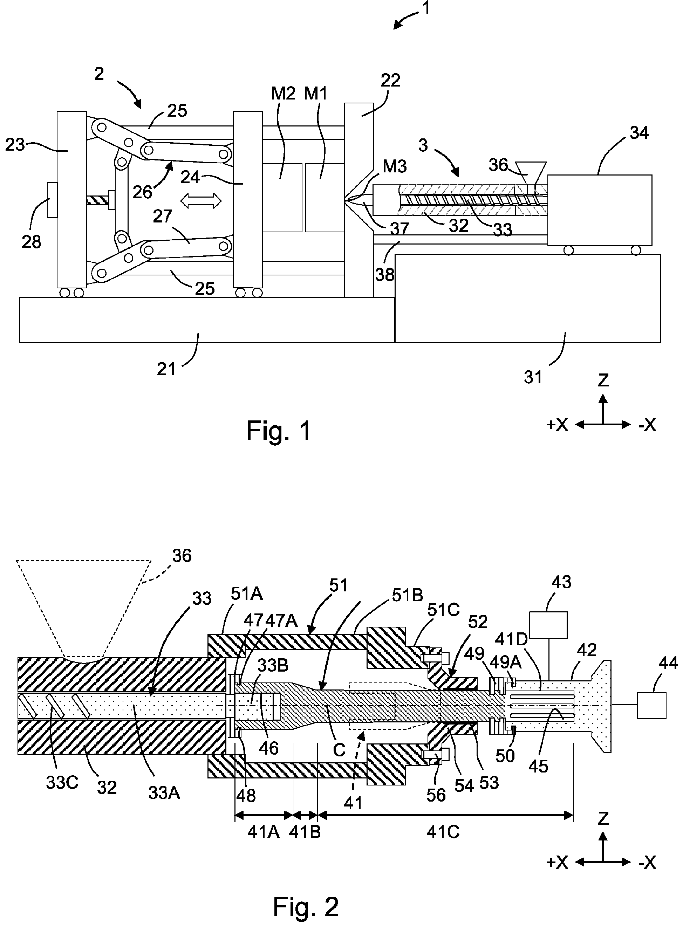

An embodiment of injection unit 3 and injection molding machine 1 equipped with injection unit 3 according to the present invention will be described with reference to the drawings. Fig. 1 shows a schematic front view of injection molding machine 1 according to this embodiment. Injection molding machine 1 generally comprises mold clamping unit 2 that clamps a mold, and injection unit 3 that heats and melts the material to be injected and injects the material. In the following description, the axial direction or direction of movement of screw 33 will be referred to as the X-direction. The X-direction is parallel to the horizontal direction. The direction in which screw 33 moves toward movable platen 24, or the direction in which the material is ejected, is referred to as the +X-direction, and the direction in which screw 33 moves away from movable platen 24 is referred to as the -X-direction. The vertical direction is called the Z-direction.

### Mold Clamping Unit 2

Mold clamping unit 2 comprises fixed platen 22 fixed on bed 21 and on which fixed mold M1 is mounted, mold clamping housing 23 that is slidable on bed 21, and movable platen 24 that can slide on bed 21 and on which movable mold M2 is mounted. Fixed platen 22 and mold clamping housing 23 are connected by a plurality of tie bars 25. Mold clamping mechanism 26 for opening and closing the mold is provided between movable platen 24 and mold clamping housing 23. By closing the mold, a cavity (not shown) is formed between fixed mold M1 and movable mold M2. Mold clamping mechanism 26 comprises toggle mechanism 27 and mold clamping motor 28 that drives toggle mechanism 27. Although not shown, mold clamping mechanism 26 may be a direct pressure mold clamping mechanism, that is, a hydraulic mold clamping cylinder.

### Injection Unit 3

Injection unit 3 is provided on base 31. Injection unit 3 comprises cylinder 32, screw 33 at least a part of which is housed inside cylinder 32, and drive mechanism 34 that drives screw 33. Screw 33 is rotationally driven by drive mechanism 34 and is also driven in the X-direction. That is, screw 33 is rotatable around the X-direction axis C of screw 33 and movable in the axial direction of cylinder 32 (X-direction). Drive mechanism 34 is covered with a cover (not shown). Hopper 36 for supplying material to be injected is provided near the end of cylinder 32 in the -X-direction.

Injection nozzle 37 is provided at the tip of cylinder 32 in the +X-direction to abut against fixed mold M1 and supply injection material to the cavity. Injection unit 3 includes nozzle touch mechanism 38. Nozzle touch mechanism 38 moves injection unit 3 forward, thereby causing injection nozzle 37 to touch sprue bush M3 of fixed mold M1. Nozzle touch mechanism 38 connects drive mechanism 34 and fixed platen 22. Nozzle touch mechanism 38 is often configured with a hydraulic device.

### Drive Mechanism 34

Fig. 2 is a front view showing a part of injection unit 3. Screw 33 is shown in a state of having moved to its limit in the +X-direction. Drive mechanism 34 comprises drive shaft 42 that drives screw 33 via connecting shaft 41, rotation drive unit 43 that rotates drive shaft 42 around axis C that is aligned in the X-direction, and axial drive unit 44 that rotates drive shaft 42 in the axial direction (X-direction). Rotation drive unit 43 and the axial drive unit 44 can be configured using a motor, a reduction device, etc., but can also be configured using a hydraulic device. As drive shaft 42 rotates, connecting shaft 41 connected to drive shaft 42 and screw 33 connected to connecting shaft 41 also rotate. When connecting shaft 41 moves in the axial direction (X-direction), drive shaft 42 and screw 33 also move in the axial direction. Drive shaft 42 has connection hole 45 that receives end region 41D of connecting shaft 41 in the -X-direction.

### Connecting Shaft 41

Connecting shaft 41 connects screw 33 and drive shaft 42. Connecting shaft 41 comprises connection part 41A connected to screw 33, transition part 41B connected to connection part 41A, and main body part 41C connected to transition part 41B. Connection part 41A, transition part 41B, and main body part 41C have circular cross sections. Since connection part 41A surrounds the side surfaces of end region 33B of screw 33 in the -X-direction, connection part 41A has an outer diameter larger than the outer diameter of end region 33B. The outer diameter of main body part 41C is smaller than the outer diameter of connection part 41A. Transition part 41B is provided for the transition between different diameters of connection part 41A and main body part 41C.

Connecting hole 46 for receiving end region 33B is provided at the +X-direction end of connection part 41A. Splines are provided on the inner surface of connecting hole 46 and the side surface of end region 33B. Since connection part 41A is spline-connected to screw 33 in this manner, rotation of connecting shaft 41 with respect to screw 33 is prevented.

End region 41D in the -X-direction of main body part 41C is supported by connecting hole 45 of drive shaft 42. The outer diameter of end region 41D is the same as the outer diameter of the other portion of main body part 41C. Splines are provided on the inner surface of connecting hole 45 in the -X-direction and on the side surface of end region 41D of main body part 41C. Since connecting shaft 41 is spline-connected to drive shaft 42 in this manner, rotation of connecting shaft 41 with respect to drive shaft 42 is prevented. The outer diameter of main body part 41C (end region 41D) can be determined according to the inner diameter of connecting hole 45.

Inner restraining member 47 is provided at the end in the +X-direction of connecting shaft 41 to prevent movement of connecting shaft 41 in the X-direction with respect to screw 33. Screw 33 comprises a cylindrical main part 33A in which flights 33C are formed, and a cylindrical end region 33B located outside of cylinder 32, and inner restraining member 47 is attached to screw 33 in end region 33B. Groove 48 is provided on the outer surface of connection part 41A of connecting shaft 41, and inner restraining member 47 includes claw part 47A that fits into groove 48.

Outer restraining member 49 is provided at a portion of connecting shaft 41 adjacent to drive shaft 42 to prevent movement of connecting shaft 41 in the X-direction with respect to drive shaft 42. Groove 50 is provided on the outer surface of drive shaft 42, and outer restraining member 49 has claw part 49A that fits into groove 50.

### Reason for Providing Connecting Shaft 41

Explanation next regards the reason for providing connecting shaft 41. Injection molding machine 1 mainly comprises a mold clamping unit and an injection unit, but the mold clamping unit and the injection unit do not necessarily have a one-to-one correspondence. For example, one injection unit selected from a plurality of types of injection units may be combined with a certain mold clamping unit. In the case of a standard combination of an injection unit and a mold clamping unit, no special modification of the mold clamping unit and the injection unit is required regardless of which injection unit is selected.

On the other hand, depending on the specifications of the molded product, a user may choose a combination other than the standard combination of an injection unit and a mold clamping unit. For example, since a large-sized mold clamping unit is used for manufacturing large-sized molded products, the large-sized mold clamping unit is generally combined with an injection unit having a large injection volume. For this reason, a large mold clamping unit is typically combined with an injection unit with a large injection volume. However, when manufacturing a molded product that is large in plan but thin, a large-sized mold clamping unit is required but the use of an injection unit with a small injection volume may be preferable. In this case, after having selected an injection unit of the standard combination, screw 33 and cylinder 32 may be replaced by equivalent components of an injection unit having a smaller injection volume. Since drive mechanism 34 (motor, etc.) of the injection unit has a sufficient margin with respect to the injection volume, no major problem arises regarding the material injection performance.

However, in an injection unit having a small injection volume, because screw 33 and cylinder 32 are generally short in length, when screw 33 is directly connected to drive shaft 42, the tip of cylinder 32 in the +X-direction is accordingly moved relatively far from the mold. Therefore, the distance that cylinder 32 moves in the X-direction becomes longer. If this movement distance cannot be realized due to functional constraints of nozzle touch mechanism 38 such as limitations on the stroke of a hydraulic cylinder, injection nozzle 37 will not be able to contact sprue bush M3 of the mold. Therefore, in order to compensate for the inadequate distance between screw 33 and cylinder 32, connecting shaft 41 is connected to screw 33, and spacer member 51 that surrounds connecting shaft 41 is attached to cylinder 32.

The lengths of connecting shaft 41 and spacer member 51 are not limited as long as injection nozzle 37 can touch sprue bush M3, but the lengths of screw 33 and cylinder 32 of the selected standard combination of injection units are preferably determined to remain substantially unchanged. That is, if the screw length of the injection unit of the selected standard combination is S1, the length of connecting shaft 41 in the X-direction is S2, and the length of the replaced screw (screw 33 in this embodiment) is S3, it is preferable to determine S2 such that S1 = S2 + S3. Similarly, if the cylinder length of the injection unit of the selected standard combination is C1, the length of spacer member 51 in the X-direction is C2, and the length of the replaced cylinder (cylinder 32 in this embodiment) is C3, it is preferable to determine C2 such that C1 = C2 + C3.

By setting the lengths of connecting shaft 41 and spacer member 51 in this manner, the substantial screw length of connecting shaft 41 and screw 33 matches the screw length of the injection unit of the selected standard combination. Furthermore, the combined substantial cylinder length of spacer member 51 and cylinder 32 matches the cylinder length of the injection unit of the selected standard combination. Therefore, parts of the injection unit of the selected standard combination, such as nozzle touch mechanism 38 and the running rail (not shown) of injection unit 3 provided on base 31 can be used without alteration.

### Spacer Member 51

Spacer member 51 is made of metal. Spacer member 51 is a generally cylindrical member that extends in the X-direction as a whole and encloses connecting shaft 41. Spacer member 51 comprises a cylindrical base part 51A that is attached to cylinder 32, a cylindrical body part 51B that is connected to base part 51A, and a cylindrical end part 51C that is connected to body part 51B. These may be integrally formed or may be joined by bolts, welding, or the like.

### Support Member 52

The injection unit 3 includes support member 52. Support member 52 comprises bush 53 fitted around connecting shaft 41 and attachment part 54 to which bush 53 is attached. Attachment part 54 is a generally circular member when viewed from the X-direction, and its outer peripheral portion is fixed to end part 51C of spacer member 51 with bolts 56. Bush 53 is a cylindrical member and is fitted to attachment part 54 so as to be in contact with attachment part 54 around the entire circumference. Therefore, a member for fixing bush 53 to attachment part 54 is not required, and the structure of support member 52 is simplified. Support member 52 allows rotation of connecting shaft 41 around the X-direction axis C, allows movement in the axial direction (X-direction), and supports connecting shaft 41 at least in the vertical direction Z.

Bush 53 is preferably an oilless bush. Since there is no need to inject lubricating oil between bush 53 and connecting shaft 41, little maintenance is required. The material of bush 53 may be either metal or resin. Examples of the resin material include tetrafluoroethylene, polyphenylene sulfide, polyetheretherketone, thermoplastic polyimide, polyamide, polyamideimide, and polyetherimide. Examples of the metal material include pure iron-based, iron-copper-based, iron-bronze-based, iron-carbon-graphite-based, bronze, and bronze-based sintered materials as specified in Japanese Industrial Standard Z2550: 2016 ("Sintered Metal Materials - Specifications"), cast iron with internal space impregnated with lubricating oil, and graphite-filled copper alloy having embedded lubricating oil and formed with a drilled cylindrical hole.

Since support member 52 supports the weight of connecting shaft 41, it is possible to reduce or eliminate any inclination of screw 33 that is connected to connecting shaft 41. Since connecting shaft 41 is connected to screw 33, any tilting of connecting shaft 41 due to the weight of connecting shaft 41 will affect screw 33. If screw 33 tilts inside cylinder 32, screw 33 may come into contact with the inner wall of cylinder 32 during rotation and/or movement of screw 33, and fine powder may be generated. If generated fine powder mixes with the injection material, there is a possibility that the fine powder will be mixed into the molded product. Furthermore, the heat generated by the contact between screw 33 and cylinder 32 may cause abnormal heating and discoloration of the surrounding injection material. In transparent molded products such as light guide plates and lenses, fine powder and discolored parts are visible from the outside as defects such as black spots and yellowed parts and may have a significant impact on product yield.

Since support member 52 is located between screw 33 and drive shaft 42 and supports connecting shaft 41, any inclination of connecting shaft 41 will be reduced, whereby any inclination of screw 33 is reduced and any contact between screw 33 and cylinder 32 is prevented. In order to reduce the inclination of connecting shaft 41, support member 52 is preferably installed near the middle between screw 33 and drive shaft 42. However, since connecting shaft 41 moves in the -X-direction together with screw 33 as shown by the broken lines in Fig. 2, connection part 41A and transition part 41B of connecting shaft 41 must be prevented from coming into contact with support member 52. For this reason, support member 52 is installed between drive shaft 42 and the position of maximum retraction of transition part 41B in the -X-direction.

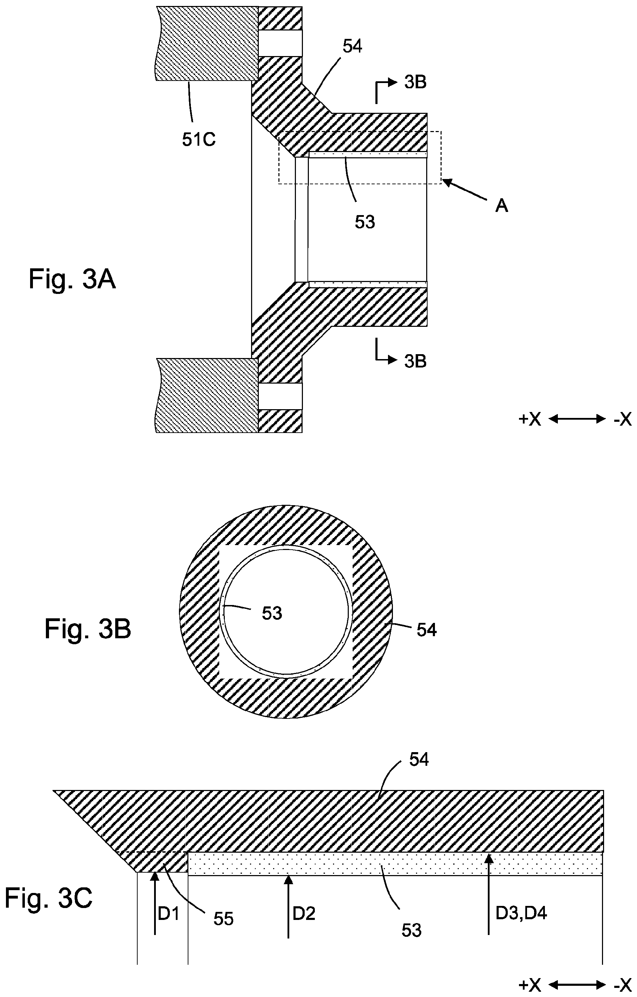

As shown in Fig. 3C, attachment part 54 includes holding part 55 that holds the tip of bush 53 that is closer to screw 33 (the tip in the +X-direction). Holding part 55 has a generally cylindrical shape. Screw 33 and connecting shaft 41 move at high speed in the +X-direction during an injection process, and holding part 55 reduces the possibility that bush 53 will be dragged in the +X-direction by connecting shaft 41 and detach from attachment part 54 during the injection process. In order to prevent holding part 55 from coming into contact with connecting shaft 41, the height of holding part 55 is preferably slightly lower than the thickness of bush 53. That is, inner diameter D1 of holding part 55 is preferably slightly larger than inner diameter D2 of bush 53.

On the other hand, during a measurement process, screw 33 and connecting shaft 41 move in the -X-direction at a lower speed than during the injection process. Since there is a little possibility that bush 53 will detach from attachment part 54 during the measurement process, there is less need to hold bush 53 by attachment part 54. Therefore, with the exception of holding part 55, the inner diameter D3 of attachment part 54 is approximately equal to outer diameter D4 of bush 53.

### First Modification

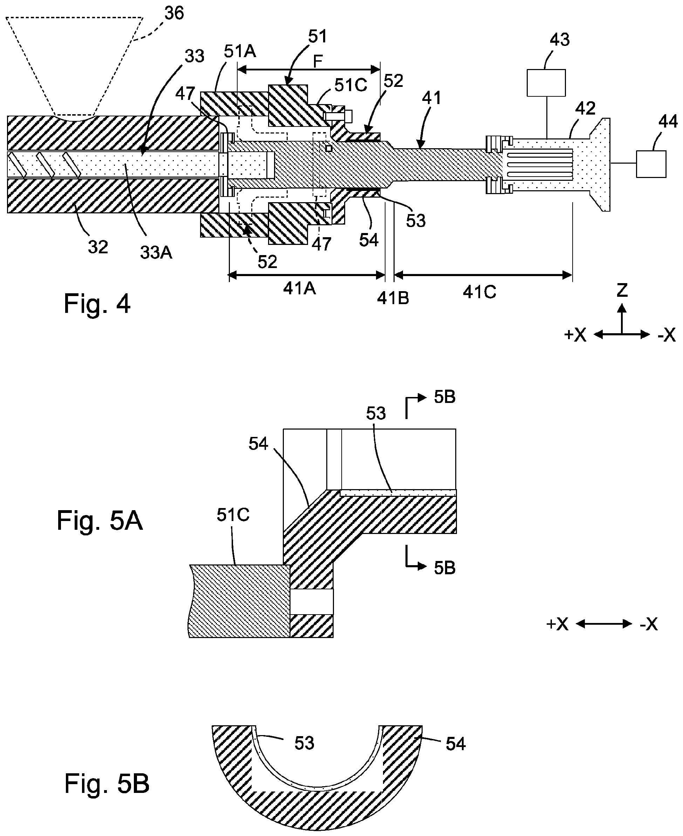

Similar to Fig. 2, Fig. 4 shows a front view of a first modification of injection unit 3. In this modification, connecting shaft 41 has a constant diameter in section F in which support member 52 can face connecting shaft 41, this diameter being equal to the diameter of connection part 41A that connects with screw 33. In other words, section F is included in connection part 41A. In Fig. 4, screw 33 is at the position of maximum movement in the +X-direction. When cylinder 32 and connecting shaft 41 move in the -X-direction from this state, inner restraining member 47 comes to the position indicated by the broken lines. For convenience, if it is assumed that connecting shaft 41 is fixed and support member 52 moves, support member 52 moves relative to connecting shaft 41 to the position indicated by the broken lines. Support member 52 is movable relative to connecting shaft 41 in this section F because connecting shaft 41 has a constant diameter in the section F between the position where support member 52 is drawn with solid lines and the position where support member 52 is drawn with broken lines.

Support member 52 can therefore be installed closer to the screw 33 side, that is, closer to the midpoint between screw 33 and drive shaft 42, and any inclination of connecting shaft 41 can be further reduced. In this modification, support member 52 must be prevented from coming into contact with inner restraining member 47 at the position where cylinder 32 is most retracted in the -X-direction.

### Second Modification

Figs. 5A and 5B show diagrams of a second modification similar to the configuration of Figs. 3A and 3B. Since support member 52 need only support connecting shaft 41 at least in the vertical direction Z, the entire circumference of connecting shaft 41 need not be supported. Bush 53 does not have to be cylindrical. In this modification, bush 53 comprises only a lower semicircular part in the vertical direction Z, and accordingly, attachment part 54 also comprises only a lower half part.

### Methods for Modifying Injection Molding Machine 1

The present disclosure can be applied to a method for modifying injection molding machine 1. The structure of this embodiment can be realized by providing support member 52 and spacer member 51 in an injection unit that does not include support member 52 and spacer member 51 in Fig. 2.

### LIST OF REFERENCE NUMERALS

- 1: injection molding machine
- 3: injection unit
- 32: cylinder
- 33: screw
- 41: connecting shaft
- 42: drive shaft
- 51: spacer member
- 52: support member
- 53: bush
- 54: attachment part
- 55: holding part

## Claims

1. An injection unit (3) comprising:
a cylinder (32);
a screw (33) at least a part of which is housed inside the cylinder (32) and that is rotatable and movable in an axial direction of the cylinder (32);
a drive shaft (42) that drives the screw (32);
a connecting shaft (41) that connects the screw (33) and the drive shaft (42); and
a support member (52) that is located between the screw (33) and the drive shaft (42), that allows rotation and movement in the axial direction of the connecting shaft (41), and that supports the connecting shaft (41) at least in a vertical direction;
**characterized in that** the injection unit (3) further comprising a spacer member (51) that is connected to the cylinder (32) and that encloses the connecting shaft (41), wherein
the support member (52) includes a bush (53) fitted to the connecting shaft (41) and an attachment part (54) for the bush (53) attached to the spacer member (51).

2. The injection unit (3) according to claim 1, wherein the bush (53) is fitted into the attachment part (54).

3. The injection unit (3) according to claim 1 or 2, wherein the attachment part (54) includes a holding part (55) that holds a tip of the bush (53) that is closer to the screw (33).

4. The injection unit (3) according to any one of claims 1 to 3, wherein the bush (53) is an oilless bush.

5. The injection unit (3) according to any one of claims 1 to 4, wherein the connecting shaft (41) has a constant diameter that is the same as a diameter of the connecting part that connects with the screw (33) in a section in which the support member (52) can face the connecting shaft (41).

6. An injection molding machine (1) comprising a mold clamping unit (2) and the injection unit (3) according to claims 1 to 5.

7. A method for modifying an injection molding machine (1) comprising:
a cylinder (32);
a screw (33) at least a part of which is housed inside the cylinder (32) and that is rotatable and movable in an axial direction of the cylinder (32);
a drive shaft (42) that drives the screw (33);
a connecting shaft (41) that connects the screw (33) and the drive shaft (42), the method comprising a step of:
attaching a support member (52) that is located between the screw (33) and the drive shaft (42), that allows rotation and movement in the axial direction of the connecting shaft (41), and that supports the connecting shaft (41) at least in a vertical direction,
**characterized in that** the injection molding machine (1) further comprises:
a spacer member (51) that is connected to the cylinder (32) and that encloses the connecting shaft (41), wherein the support member (52) includes a bush (53) fitted to the connecting shaft (41) and an attachment part (54) for the bush (53) attached to the spacer member (51).

## Patentansprüche

1. Einspritzeinheit (3), bestehend aus:
einem Zylinder (32);
einer Schnecke (33), von der zumindest ein Teil im Inneren des Zylinders (32) untergebracht ist und die drehbar und in einer axialen Richtung des Zylinders (32) beweglich ist;
einer Antriebswelle (42), die die Schnecke (32) antreibt;
einer Verbindungswelle (41), die die Schnecke (33) und die Antriebswelle (42) verbindet; und
einem Stützbauteil (52), das zwischen der Schnecke (33) und der Antriebswelle (42) angeordnet ist, das eine Drehung und Bewegung in der axialen Richtung der Verbindungswelle (41) ermöglicht und das die Verbindungswelle (41) zumindest in einer vertikalen Richtung stützt;
**dadurch gekennzeichnet, dass** die Einspritzeinheit (3) zudem ein Abstandsbauteil (51) umfasst, das mit dem Zylinder (32) verbunden ist und die Verbindungswelle (41) umschließt, wobei
das Stützbauteil (52) eine auf der Verbindungswelle (41) angebrachte Buchse (53) und ein Befestigungsteil (54) für die Buchse (53) umfasst, das an dem Abstandsbauteil (51) angebracht ist.

2. Einspritzeinheit (3) nach Anspruch 1, wobei die Buchse (53) in das Befestigungsteil (54) eingesetzt ist.

3. Einspritzeinheit (3) nach Anspruch 1 oder 2, wobei das Befestigungsteil (54) ein Halteteil (55) aufweist, das eine Spitze der Buchse (53) hält, die näher an der Schnecke (33) liegt.

4. Einspritzeinheit (3) nach einem der Ansprüche 1 bis 3, wobei die Buchse (53) eine ölfreie Buchse ist.

5. Einspritzeinheit (3) nach einem der Ansprüche 1 bis 4, wobei die Verbindungswelle (41) einen konstanten Durchmesser aufweist, der gleich dem Durchmesser des Verbindungsteils ist, das mit der Schnecke (33) in einem Abschnitt verbunden ist, in dem das Stützbauteil (52) der Verbindungswelle (41) gegenüberliegen kann.

6. Spritzgießmaschine (1) mit einer Formschließeinheit (2) und der Einspritzeinheit (3) nach einem der Ansprüche 1 bis 5.

7. Verfahren zum Modifizieren einer Spritzgießmaschine (1), umfassend:
einen Zylinder (32);
eine Schnecke (33), von der zumindest ein Teil im Inneren des Zylinders (32) untergebracht ist und die drehbar und in einer axialen Richtung des Zylinders (32) beweglich ist;
eine Antriebswelle (42), die die Schnecke (33) antreibt;
eine Verbindungswelle (41), die die Schnecke (33) und die Antriebswelle (42) miteinander verbindet, wobei das Verfahren einen Schritt umfasst, bei dem:
Anbringen eines Stützbauteils (52), das zwischen der Schnecke (33) und der Antriebswelle (42) angeordnet ist, das eine Drehung und Bewegung in der axialen Richtung der Verbindungswelle (41) ermöglicht und das die Verbindungswelle (41) zumindest in einer vertikalen Richtung stützt,
**dadurch gekennzeichnet, dass** die Spritzgießmaschine (1) weiterhin umfasst:
ein Abstandsbauteil (51), das mit dem Zylinder (32) verbunden ist und die Verbindungswelle (41) umschließt, wobei das Stützbauteil (52) eine an der Verbindungswelle (41) angebrachte Buchse (53) und ein an dem Abstandsbauteil (51) befestigtes Befestigungsteil (54) für die Buchse (53) aufweist.

## Revendications

1. Une unité d'injection (3) comprenant :
un cylindre (32) ;
une vis (33) dont au moins une partie est logée à l'intérieur du cylindre (32) et qui est rotative et mobile dans une direction axiale du cylindre (32) ;
un arbre d'entraînement (42) qui entraîne la vis (32) ;
un arbre de liaison (41) qui relie la vis (33) et l'arbre d'entraînement (42) ; et
un élément de support (52) situé entre la vis (33) et l'arbre d'entraînement (42), qui permet la rotation et le mouvement dans la direction axiale de l'arbre de liaison (41) et qui supporte l'arbre de liaison (41) au moins dans une direction verticale ;
**caractérisé par le fait que** l'unité d'injection (3) comprend en outre un élément d'écartement (51) qui est relié au cylindre (32) et qui entoure l'arbre de connexion (41), dans lequel
l'élément de support (52) comprend une douille (53) fixée à l'arbre de liaison (41) et une pièce de fixation (54) pour la douille (53) fixée à l'élément d'écartement (51).

2. Unité d'injection (3) selon la revendication 1, dans laquelle la douille (53) est montée dans la pièce de fixation (54).

3. L'unité d'injection (3) selon la revendication 1 ou 2, dans laquelle la partie de fixation (54) comprend une partie de maintien (55) qui maintient une pointe de la douille (53) qui est plus proche de la vis (33).

4. Unité d'injection (3) selon l'une des revendications 1 à 3, dans laquelle la douille (53) est une douille sans huile.

5. L'unité d'injection (3) selon l'une des revendications 1 à 4, dans laquelle l'arbre de liaison (41) a un diamètre constant qui est le même qu'un diamètre de la partie de liaison qui se connecte à la vis (33) dans une section dans laquelle l'élément de support (52) peut faire face à l'arbre de liaison (41).

6. Machine de moulage par injection (1) comprenant une unité de fermeture de moule (2) et l'unité d'injection (3) selon les revendications 1 à 5.

7. Procédé de modification d'une machine de moulage par injection (1) comprenant :
un cylindre (32) ;
une vis (33) dont une partie au moins est logée à l'intérieur du cylindre (32) et qui est rotative et mobile dans la direction axiale du cylindre (32) ;
un arbre d'entraînement (42) qui entraîne la vis (33) ;
un arbre de liaison (41) qui relie la vis (33) et l'arbre d'entraînement (42), le procédé comprenant une étape consistant à :
fixer un élément de support (52) situé entre la vis (33) et l'arbre d'entraînement (42), qui permet la rotation et le mouvement dans la direction axiale de l'arbre de liaison (41) et qui soutient l'arbre de liaison (41) au moins dans une direction verticale,
**caractérisé par le fait que** la machine de moulage par injection (1) comprend en outre :
un élément d'écartement (51) qui est relié au cylindre (32) et qui entoure l'arbre de connexion (41), dans lequel l'élément de support (52) comprend une douille (53) montée sur l'arbre de connexion (41) et une pièce de fixation (54) pour la douille (53) fixée à l'élément d'écartement (51).
